# EUROPEAN PATENT APPLICATION

(11) **EP 0 829 727 A2**
(43) Date of publication of application: **18.03.1998**
(21) Application number: 97101527.6
(22) Date of filing: 31.01.1997
(51) Int. Cl.: G01P 13/00

(54) **Method and device for detecting a gaseous flow**

(30) Priority: 06.09.1996 IT MI961841
(71) Applicant: DE' LONGHI S.p.A., 31100 Treviso (IT)
(72) Inventor: De' Longhi, Giuseppe, 31100 Treviso (IT)
(74) Representative: Rapisardi, Mariacristina

(57) **Abstract**

A device for detecting a gaseous flow, including at least a first and a second temperature probes (2,3), at least one resistance (4) arranged at the first probe and analysis unit for measuring the different temperature between the first and second probes with preset parameters for detecting a gaseous flow.

## Description

The present invention relates to a method and a device for detecting a gaseous flow.

Currently, adapted instruments, called anemometers, are used for detecting the speed and therefore the presence of a gaseous flow in conduits, tunnels, wind tunnels and in vents of industrial plants.

The anemometers may be divided into two types, according to their operation: mechanical anemometers and electrical anemometers. Mechanical anemometers exploit the dynamic pressure of wind or gaseous flows against rotating mechanical members (revolving-cup anemometers and blade anemometers), or directly measure the gaseous flow by means of Pitot tubes (speed indicating anemometers).

The electrical anemometers exploit the heat exchange between flowing fluids and electrically heated wires (hot-wire anemometers).

In air conditioning apparatus, blade anemometers are usually employed having a flowing fluid detecting member constituted by an impeller, having an horizontal axis and six or eight blades. The number of turns of the impeller can be read on a board. The impeller must be lightweight to keep friction low and to allow to detect very light and almost negligible flows.

The anemometers are therefore very sophisticated instruments and consequently very delicate and expensive.

For the above reason, there are many situations where anemometers are not employed, even though it would be preferable to be able to detect a gaseous flow.

The aim of the present invention is to eliminate the above described drawbacks of the prior art.

Within the above aim, an object of the invention is to provide a method and a device, for detecting a gaseous flow, which are extremely simple and economic and at the same time guarantee a high precision even in detecting negligible flows or very slow flows.

A further object of the invention is to provide a method and a device, for detecting a gaseous flow, for use in any type of application and preventing the need of sophisticated and expensive apparatus.

Still a further object of the invention is to provide a method and a device, for detecting a gaseous flow, that can be used in air conditioning apparatus using a flammable gas as refrigerating fluid, without affecting the cost of the apparatus.

Still a further object of the invention is to provide a method and a device, for detecting a gaseous flow, which, in the case of the above apparatus, may use existing members thus having negligible costs of application and operation.

The above aim, as well as these and other objects that will be more apparent hereinafter, are achieved by a method for detecting a gaseous flow characterized in that it comprises: detecting the air temperature in two distinct detecting zones both uniformly affected by the gaseous flow; artificially varying the temperature value in one of said two detecting zones by administering a temperature different from the temperature of the surrounding air; measuring the difference of temperature between said two detecting zones and comparing said difference with a preset threshold temperature for detecting said gaseous flow.

Said method is performed by a device for detecting a gaseous flow, characterized in that it comprises at least a first and a second temperature probes, at least one resistance arranged at said first probe and analysis means of the different temperature between said first and second probes with preset parameters for detecting said gaseous flow.

The present invention also relates to an air treating apparatus using a flammable gas as a refrigerating fluid, having at least one air flow generating fan, characterized in that it comprises a control device adapted to check the operation of said fan, comprising detecting means for detecting the air flow generated by said fan during its operation.

Further characteristics and advantages of the invention will be more apparent by the following description of a method and a device for detecting a gaseous flow, according to the invention, illustrated, by way of example in the enclosed drawings in which:
FIG. 1 schematically shows the device for detecting a gaseous flow according to the invention;
FIG. 2 is a flow chart illustrating the operation of the device for detecting a gaseous flow according to the invention; and
FIG. 3 schematically shows the implementation of the method and the device for detecting a gaseous flow, according to the invention, to an air treating apparatus such as an air conditioner or, as in the present case, a dehumidifier, using a flammable gas as refrigerating fluid and comprising at least one fan generating an air flow.

With reference to the drawings, the method for detecting a gaseous flow, according to the invention, consists of detecting the air temperature, simultaneously and for a preset number of times, in two distinct zones both affected by the same gaseous flow to be detected.

Before and during the reading of the air temperatures in said zones, the temperature in one of the zones is artificially varied by administering a temperature which is different from the air temperature.

Namely, the temperature in one of the two zones is brought to a value higher than the air temperature, but nothing prevents from bringing the temperature down to a lower value than the temperature of the air surrounding the two zones.

If a gaseous flow is present, there is a continuous flow of air at ambient temperature in the two detecting zones and therefore, in one zone, the one where a temperature different from the air temperature has been artificially administered, there will be an equilibrium condition different from the zone where the actual air temperature is measured.

By measuring the temperature difference between the first and second zones and by comparing the temperature difference with a preset threshold temperature, it is possible to detect the presence of a gaseous flow.

The device for performing the above method, generally designated by the reference numeral 1, comprises at least a first and a second temperature probes, respectively designated by the numerals 2 and 3.

A resistance 4 is arranged at the proximity of, and more particularly in contact with, the first probe 2, such that the value of the temperature measured by the first probe 2 is affected by both the temperature of the resistance 4 and by the temperature of the air surrounding the resistance.

By way of example, using a 1 Watt resistance and a 10 Kohm temperature probe, with no ventilation the temperature measured by the first probe 2 will be of about 65°C above the ambient air.

If there is ventilation, the first probe 2 will instead measure a temperature 4°C above the ambient air.

Through analysis means, namely through a microprocessor, it is possible to measure the different temperature between the first temperature probe 2 and the second temperature probe 3 and to compare the temperature difference (δT) with a threshold temperature value which is of course comprised between 4°C and 65°C.

In this manner, by means of the microprocessor, it is possible to determine the presence or absence of the gaseous flow depending on the δT, i.e. the temperature difference between the first and second probes, being greater or less than the preset threshold temperature.

The first and second probes are identically calibrated and are spaced apart of a preset distance and are arranged in a zone uniformly affected by the gaseous flow.

If the gaseous flow is provided by a fan, the above described device advantageously allows to check the operation of the fan by detecting the presence or absence of the gaseous flow generated by the fan.

The above is particularly advantageous in air treating apparatus using a flammable gas as refrigerating fluid.

As known, the use of a flammable gas as refrigerating fluid, used in the apparatus of the present invention, has flammable limits defined respectively as minimum and maximum concentrations of fluid capable to propagate the flame through a mixture of air and of the same fluid, in certain pressure and temperature conditions.

It is therefore possible to keep a condition inside the apparatus such that the refrigerating fluid operates under absolute safety, according to the flammable gas used as refrigerating fluid, and once the minimum and maximum concentrations are established above which and under which the gas is flammable.

The most simple, economic and effective method to obtain the above conditions is to generate a gaseous flow which allows to remove any possible minimum or maximum concentration of refrigerating fluid, from inside the apparatus, falling within the flammable limits, when, for example, gas pockets form inside the apparatus. The gas pockets could be caused by possible leaks which, at the start of the apparatus would catch fire or detonate.

For the above reason, before starting the air treating apparatus, such as an air conditioner or a dehumidifier or similar, the inside of the apparatus is "washed" by means of an air flow or gaseous flow, which removes possible gas concentrations.

At the end of this operation the apparatus is ready to operate under safety conditions.

The most economical and effective way of performing this "washing" is to use the fan which is already provided in this type of apparatus, and it is therefore understood how important it is to check the operation of the fan for the safety of the apparatus.

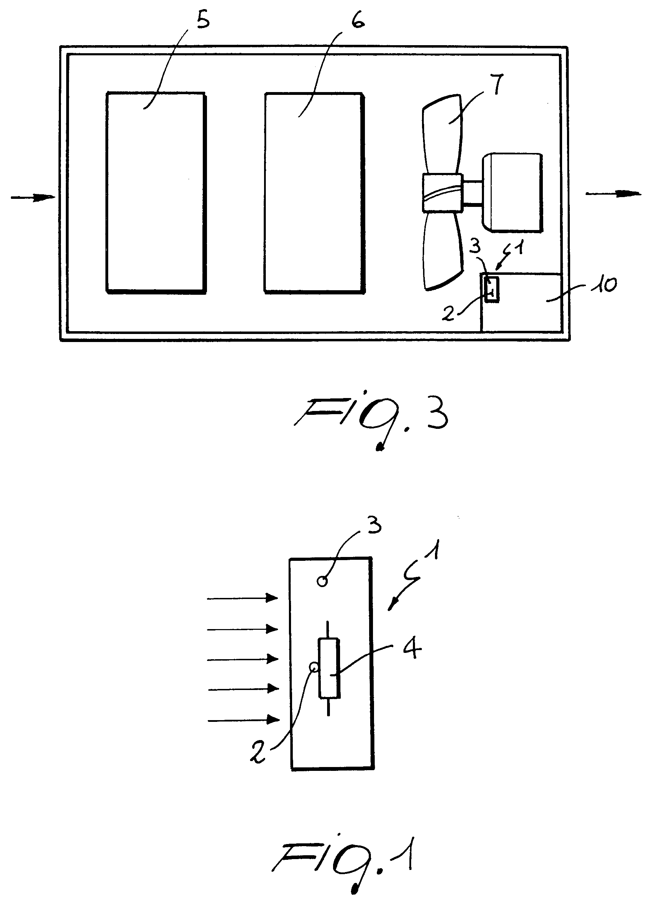

The operation of the fan is checked in an extremely effective and economic way by implementing the device for detecting a gaseous flow above described and illustrated in FIG. 1, to an air treating apparatus using a flammable gas as refrigerating fluid.

In particular, FIG. 3 schematically illustrates a dehumidifier, as air treating apparatus using a flammable gas as refrigerating fluid, and the reference numbers 5 and 6 respectively designate the evaporator and the condenser of the dehumidifier.

The reference numeral 7 designates the fan adapted to operate the dehumidifier and, in the present case, adapted to perform the so-called "washing" inside the dehumidifier for its operation under complete safety by eliminating flammable gas pockets possibly formed by leaks.

In particular, the apparatus shown in FIG. 3 comprises a fan 7 generating a gaseous current or air flow directed as shown by arrows in FIG. 3.

The apparatus, as described above, comprises a control device adapted to check the operation of the fan 7 and defined by the device 1 illustrated in FIG. 1.

As described above, a microprocessor 10 checks the operation of the first and second probes 2 and 3, detects the different temperature between the two probes and the compares the temperature difference with a threshold temperature.

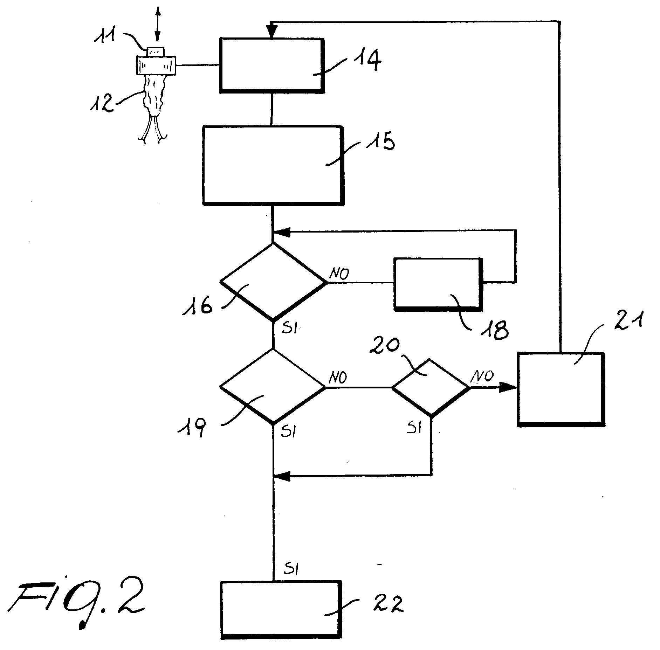

Namely, microprocessor 10 performs the following steps, illustrated in the flow chart of in FIG. 2.

The apparatus is turned on (14) by a flame-proof switch 11, made by applying a thermoretractable sheath 12 to a commercially available switch, and therefore of low cost.

The sheath 12 provides for a perfect insulation of the switch in a simple and effective manner preventing possible sparks from igniting possible gas leaks.

The fan 7 is activated by turning on the apparatus and performs a preventilation 15.

The speed of fan 7 will be a preset minimum speed and the time of preventilation will be a preset time according to the requirements.

Then, there is a check 16 of the operational status of first and second probes 2 and 3.

If there is any anomaly of operation (step 18), the microprocessor does not activate the compressor and alerts the user by turning on an alarm.

If the operational status of the probes is OK, the operational status of fan 7 is checked at step 19.

If fan 7 has an operational malfunction, the possible working speeds of fan 7 are checked at step 20.

If fan 7 cannot operate (step 21) the compressor is not activated and the alarm is again set off to alert the user on the malfunctioning of the apparatus.

If fan 7 is malfunctioning but is still capable of ensuring a safe operation, the alarm is again set off, at step 22, but all the electrical utilities are started and the apparatus can be operated.

The invention achieves the intended aim and objects and has several further advantages.

In fact, a novel method and apparatus have been devised, for detecting a gaseous flow or an air flow, which are extremely economical and effective and can be implemented in several technical fields.

In particular, the present invention also relates to an air treating apparatus using a flammable gas as refrigerating fluid and using a the above describe device for detecting a gaseous flow for checking the operational status of the fan employed for internally washing the apparatus.

The device and method thus conceived may have numerous modifications and variations, all within the inventive concept; furthermore, all the details may be substituted with technically equivalent elements.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for detecting a gaseous flow characterized in that it comprises: detecting the air temperature in two distinct detecting zones both uniformly affected by the gaseous flow; artificially varying the temperature value in one of said two detecting zones by administering a temperature different from the temperature of the surrounding air; measuring the difference of temperature between said two detecting zones and comparing said difference with a preset threshold temperature for detecting said gaseous flow.

2. A device for detecting a gaseous flow, characterized in that it comprises at least a first and a second temperature probes (2,3), at least one resistance (4) arranged at said first probe and analysis means (10) of the different temperature between said first and second probes with preset parameters for detecting said gaseous flow.

3. The device, according to claim 2, characterized in that said first and second probes (2,3) are identically calibrated and are spaced apart of a preset distance and are arranged in a zone uniformly affected by said gaseous flow.

4. The device, according to one or more of the preceding claims, characterized in that said analysis means comprises a microprocessor (10) adapted to check the operational status of said probes, to measure the different temperature between said probes and to compare said temperature difference with a threshold temperature.

5. The device, according to one or more of the preceding claims, characterized in that said threshold temperature is comprised between 4°C and 65°C, using a 1 Watt resistance and a 10 Kohm temperature probe.

6. The device, according to one or more of the preceding claims, characterized in that said gaseous flow is generated by a fan (7).

7. An air treating apparatus using a flammable gas as a refrigerating fluid, having at least one air flow generating fan (7), characterized in that it comprises a control device (1) adapted to check the operation of said fan, said device comprising detecting means (2,3,4,10) for detecting the air flow generated by said fan during its operation.

8. The apparatus, according to claim 7, characterized in that said detecting means comprises at least a first and a second temperature probes (2,3), at least one resistance (4) arranged at said first probe and analysis means (10) of the different temperature between said first and second probes with preset parameters.

9. The apparatus, according to one or more of the preceding claims, characterized in that said first and second probes (2,3) are identically calibrated and are spaced apart of a preset distance and are arranged in a zone uniformly affected by said gaseous flow.

10. The apparatus, according to one or more of the preceding claims, characterized in that said analysis means comprises a microprocessor (10) adapted to check the operational status of said probes, to measure the different temperature between said probes and to compare said temperature difference with a threshold temperature.

11. The apparatus, according to one or more of the preceding claims, characterized in that said resistance is in contact with said first probe and is part of the power circuit of said apparatus.

12. The apparatus, according to one or more of the preceding claims, characterized in that it comprises a power switch (11) perfectly insulated from the surrounding air by applying a thermoretractable sheath (12) on the electrically live walls of a conventional non-insulated switch.
